# EUROPEAN PATENT APPLICATION

(11) **EP 4 455 065 A1**
(43) Date of publication of application: **30.10.2024**
(21) Application number: 23865830.6
(22) Date of filing: 13.09.2023
(51) Int. Cl.: B65H 23/038, H01M 10/04

(54) **POSITION ROLLER FOR CONTROLLING WEB TELESCOPING**

(30) Priority: 13.09.2022 KR 20220114644
(71) Applicant: LG Energy Solution, Ltd., Seoul 07335 (KR)
(72) Inventor: LEE, Hee Moon, Daejeon 34122 (KR); LEE, Jin Soo, Daejeon 34122 (KR); KIM, Ki Su, Daejeon 34122 (KR); NA, Se Yong, Daejeon 34122 (KR); PARK, Sung Min, Daejeon 34122 (KR)
(74) Representative: Goddar, Heinz J.
(86) International application number: PCT/KR2023/013685
(87) International publication number: WO 2024/058533

(57) **Abstract**

A position roller for meander control includes, in one example, a roller with a rotational axis; a first ball joint supporting a distal end among both ends of the rotational axis for pivotal movement; an XZ driver that drives a proximal end among both ends of the rotational axis into two-dimensional motion in a plane; and a base supporting the first ball joint and the XZ driver.

## Description

### [Technical Field]

The present invention relates to a position roller capable of controlling the meandering of a web member travelling at an angle on a transfer roller.

This application claims the benefit of priority to Korean Patent Application No. 10-2022-0114644, filed on September 13, 2022, the disclosure of which is incorporated herein by reference in its entirety.

### [Background Technology of the Invention]

With the technological development and increasing demand for mobile devices, the demand for secondary batteries is also increasing rapidly. Among them, lithium secondary batteries are widely used as an energy source for various electronic products, including mobile devices, due to their high energy density, high operating voltage, and excellent preservation and lifetime characteristics.

A lithium secondary battery has a structure in which an electrode assembly with a porous separator interposed between a positive electrode and negative electrode coated with an active material, respectively, is impregnated with an electrolyte containing lithium salts. A positive electrode active material is mainly composed of lithium cobalt oxide, lithium manganese oxide, lithium nickel oxide, lithium complex oxide, and a negative electrode active material is mainly composed of carbon-based materials. When charging, lithium ions from the positive electrode active material are released and inserted into the carbon layer of the negative electrode, and when discharging, lithium ions from the negative electrode carbon layer are released and inserted into the positive electrode active material, and the electrolyte acts as a medium to transfer lithium ions between the negative electrode and positive electrode.

Electrode assemblies can be roughly categorized into Jellyroll-type, which is wound with a separator interposed between the positive electrode and negative electrode of an active material-coated sheet, a stack-type, which is a sequential stacking of a plurality of positive electrodes and negative electrodes with a separator interposed therebetween, and a stack & folding type, in which is stack-type unit cells are wound with a long separator film. Secondary batteries are further categorized into coin-type batteries, cylindrical batteries, prismatic batteries, and pouch-type batteries based on the shape of the battery case.

The manufacturing process of a secondary battery involves the use of large quantities of thin metal films for the positive electrode and negative electrode, thin films for the separator, and, in the case of pouch-type batteries, pouch is manufactured to a laminated sheet for the packaging material. Thin, flexible continuous media such as films, paper, metal films, and the like are collectively referred to as webs (or web members), which are transferred in a roll-to-roll method for the productivity of secondary batteries.

In the roll-to-roll method, various rollers, including winders and unwinders, transfer rollers, idle rollers, and tension rollers, which wind or unwind the web against the roll, are provided as a transfer device. The web member travels on these various rollers, and a meandering phenomenon often occurs in which the web member travels at an oblique angle to the center of travel.

Left unchecked, meandering can lead to high defect rates, failure of various devices that process the web, and there may be a need to discard the web member due to folds, breaks, bends, wrinkles, and the like in the web member.

The meandering is usually compensated by using a meander control device called EPC (Edge Position Controller). The meander control device often uses the pivot centering method, which is a structure in which two rollers are rotatably mounted in one frame, and the meandering is controlled by generating a plane pivot movement relative to the center of the frame. In other words, assuming that there is little slip between the rollers and the web, the traveling direction of the web can be adjusted by changing the angle of the rollers by rotating the frame, causing a change in the moment direction of the web center.

However, this pivotal centering method uses only one degree of freedom of the center pivot, so it is difficult to respond to lifting in the height direction of the web, and the installation location is limited due to the structure of adjusting by interweaving two rollers into one frame. Another disadvantage is that the size of the frame is fixed, so if the specifications of the transfer equipment are changed, it must be manufactured again with customized specifications.

### [Description of the Invention]

### [Technical Problem]

The present invention aims to provide a position roller for meander control, which can effectively control a meandering phenomenon occurring in a web transferred by a roll-to-roll method and is easy to install, and a meander control device including the same.

However, the technical problems that the present invention seeks to address are not limited to those described above, and other problems not mentioned will be apparent to those of ordinary skill in the art from the following description of the invention.

### [Technical Solution]

The present invention relates to a position roller for meander control, which in one example includes a roller with a rotational axis; a first ball joint supporting a distal end among both ends of the rotational axis for pivotal movement; an XZ driver that drives a proximal end among both ends of the rotational axis into two-dimensional motion in a plane; and a base supporting the first ball joint and the XZ driver.

Here, the first ball joint supports the distal end of the rotational axis so that it can pivot in any direction.

In addition, the first ball joint is supported to move forward and backward on a Y-axis rail mounted on the base.

In addition, the XZ driver may include: a second ball joint coupled to the proximal end of the rotational axis; a Z-axis frame having a Z-axis rail to which the second ball joint is coupled for linear movement; a Z-axis driver to provide power for linear movement of the second ball joint along the Z-axis rail; an X-axis frame having an X-axis rail to which the Z-axis frame is coupled for linear movement; and an X-axis driver to provide power for linear movement of the Z-axis frame along the X-axis rail.

Here, the second ball joint may support the proximal end of the rotational axis for pivoting in any direction.

In addition, the first ball joint may passively move forward and backward on the Y-axis rail in response to linear movement of the second ball joint and Z-axis frame by the XZ driver.

Meanwhile, the present invention provides a meander control device including: first and second position rollers for meander control having the above-mentioned configuration; a first edge position sensor (EPS) disposed upstream of the first position roller for meander control; a second EPS disposed downstream of the second position roller for meander control; a first idle roller disposed between the first EPS and the first position roller for meander control; a second idle roller disposed between the second position roller for meander control and the second EPS; and a control part that controls each XZ driver of the first and second position rollers for meander control based on the meander traveling information detected by the first EPS.

According to an exemplary embodiment of the present invention, the control part may perform feedback control using the meander traveling information detected by the second EPS as the feedback value.

In addition, the control part may independently control each XZ driver of the first and second position rollers for meander control.

In addition, the control part may control the XZ driver of the first position roller for meander control to control the angle of incidence of the traveling web, and may control the XZ driver of the second position roller for meander control to control the angle of exit of the traveling web.

In addition, the control part may control each X-axis driver of the first and second position rollers for meander control to control the angle of incidence and the angle of departure of the traveling web, while controlling each Z-axis driver of the first and second position rollers for meander control to control the slip of the traveling web.

### [Advantageous Effects]

The position roller for meander control of the present invention with the above configuration, and the meander control device including it, enables the roller to freely implement a steering movement on the X plane and a tilting movement on the Z plane where the rotational axis distal end becomes a pivot point, thereby maximizing the friction force on the web traveling on the roller. As a result, the slip phenomenon of the web is prevented, and the meander control ability is improved as the slip of the web is minimized.

In addition, the present invention has the advantage that the configuration of the position roller for meander control does not occupy a large space due to the compact arrangement of the roller and the XZ driver on a single base, so it has a high degree of freedom in selecting the installation location.

However, the technical effects of the present invention are not limited to those described above, and other effects not mentioned will be apparent to one of ordinary skill in the art from the following description of the invention.

### [Brief Description of the Drawings]

The following drawings, which accompany this specification, are illustrative of preferred embodiments of the present invention and serve to further illustrate the technical ideas of the present invention in conjunction with the detailed description of the invention that follows, and the present invention is not to be construed as limited to what is shown in such drawings.
FIG. 1 is a perspective view illustrating a position roller for meander control according to an exemplary embodiment of the present invention.
FIG. 2 is a plan view of the position roller for meander control of FIG. 1.
FIG. 3 is a front view of the position roller for meander control of FIG. 1.
FIG. 4 is a right side view of the position roller for meander control of FIG. 1.
FIG. 5 is a diagram illustrating the fixing structure of the roller rotational axis in the position roller for meander control of FIG. 1.
FIG. 6 is a diagram illustrating an exemplary embodiment of a meander control device having the position roller for meander control of FIG. 1.
FIG. 7 is a diagram illustrating an exemplary example of controlling the angle of incidence and exit of the web by the meander control device of FIG. 6.

### [Best Mode for Invention]

The present invention is subject to various modifications and can have many embodiments, certain of which are described in detail below.

However, this is not intended to limit the present invention to any particular embodiment and is to be understood to include all modifications, equivalents, or substitutions that fall within the scope of the thought and skill of the present invention.

In this application, it should be understood that terms such as "include" and "have" are intended to indicate the presence of a feature, number, step, operation, component, part, or a combination thereof described in the specification, and they do not preclude the possibility of the presence or addition of one or more other features or numbers, steps, operations, components, parts or combinations thereof.

Also, when a first portion such as a layer, a film, an area, a plate, etc. is referred to as being "on" a second portion, this includes not only the case where the first portion is "directly on" the second portion, but also the case where a third portion is interposed therebetween. On the other hand, when a first portion such as a layer, a film, an area, a plate, etc. is referred to as being "under" a second portion, this includes not only the case where the first portion is "directly under" the second portion, but also the case where a third portion is interposed therebetween. In addition, to be disposed "on" in the present application may include the case of being disposed at the bottom as well as the top.

The present invention relates to a position roller for meander control, which in one example includes a roller with a rotational axis, a first ball joint supporting a distal end among both ends of the rotational axis for pivotal movement, an XZ driver that drives a proximal end among both ends of the rotational axis into two-dimensional motion in a plane, and a base supporting the first ball joint and the XZ driver.

With such a configuration, the position roller for meander control of the present invention enables the proximal end of the rotational axis of the roller to perform a two-dimensional movement combining a steering movement in the X plane and a tilting movement in the Z plane, and enables the distal end of the rotational axis of the roller to passively move forward and backward along the Y axis direction in response, thereby maximizing the friction force on the web traveling on the roller.

In this way, the slip of the web is prevented as the friction force on the web is maximized, and the ability to control meandering is improved as the slip of the web is minimized. In particular, the position roller for meander control of the present invention has the advantage that the roller and the XZ driver are compactly arranged on one base and do not occupy a large space, so there is a high degree of freedom in selecting the installation location.

### [Modes for Invention]

Hereinafter, specific embodiments of the position roller for meander control 100 of the present invention will be described with reference to the accompanying drawings. For reference, front and rear directions or up, down, left, and right directions for designating relative positions used in the following description are intended to help the understanding of the present invention and are based on directions shown in the drawings unless otherwise specified.

### [First embodiment]

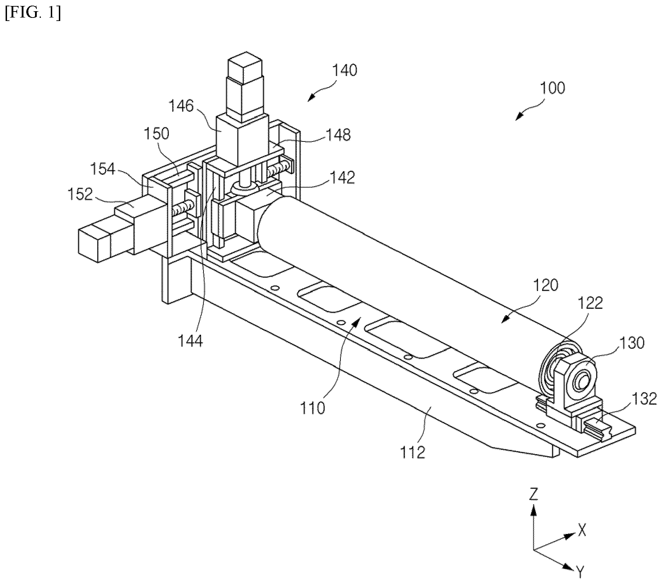

FIG. 1 is a perspective view of a position roller for meander control 100 according to an exemplary embodiment of the present invention. The position roller for meander control 100 of the present invention can maximize the friction force on the web Wb traveling on the roller 120 by performing a two-dimensional movement in which one end of the rotational axis 122 of the roller 120 performs a steering movement in the X plane and a tilting movement in the Z plane. Referring to the drawings, the specific configuration of the position roller for meander control 100 will be described in detail as follows.

Referring to FIG. 1, the position roller for meander control 100 of the present invention is provided with a single roller 120 having a rotational axis 122. As will be described later in the detailed description, the position roller for meander control 100 of the present invention is paired to form a meander control device 1000, thereby solving the problem that the installation environment of the conventional meander control device is greatly affected by having two rollers in one frame.

The distal end (relative to the XZ driver position) of the rotational axis 122 provided in the roller 120 is supported for pivotal movement by the first ball joint 130. As the first ball joint 130, a Spherical Plain Bearing can be applied, and by the first ball joint 130, the distal end of the rotational axis 122 can perform omnidirectional pivotal movement in a fixed state.

In addition, the proximal end opposite the two ends of the rotational axis 122 is coupled to the XZ driver 140, and the proximal end of the rotational axis 122 are moved by the XZ driver 140 in a two-dimensional motion in a plane. The angle that the roller 120 makes with respect to the web Wb traveling by the XZ driver 140 is changed, and the direction of the moment of the center of the web Wb is changed accordingly, so that the traveling direction of the web Wb can be adjusted.

The base 110 acts as a pedestal to hold the structure of the position roller for meander control 100, and the first ball joint 130 and the XZ driver 140 are mounted on the base 110. In addition, both ends of the roller 120 are indirectly mounted on the base 110 as a suspension structure coupled to the first ball joint 130 and the XZ driver 140, respectively.

For reference, the base 110 in the illustrated embodiment has several through-holes formed for lightweighting, and vertical ribs 112 bonded to its lower surface to increase structural rigidity.

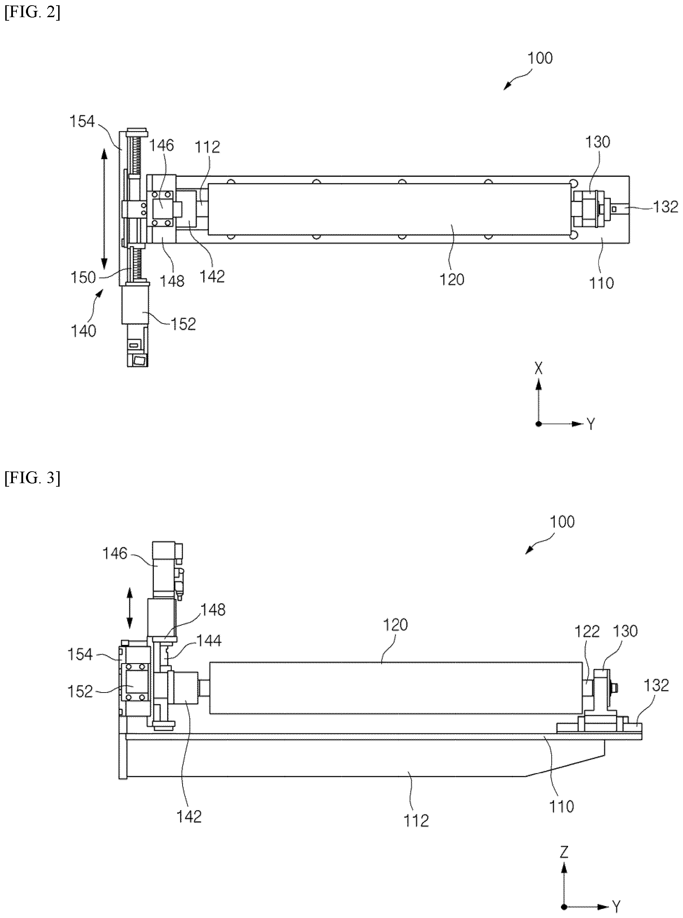

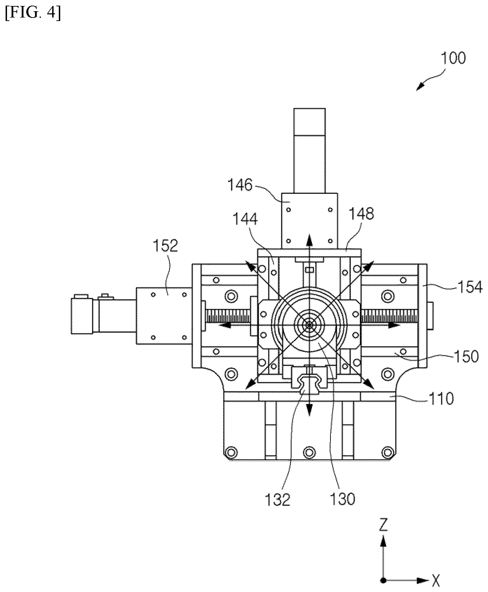

FIG. 2 is a plan view of the position roller for meander control 100 of FIG. 1, FIG. 3 is a front view of the position roller for meander control 100 of FIG. 1, and FIG. 4 is a right side view of the position roller for meander control 100 of FIG. 1.

Referring to FIG. 1 to describe the XZ driver 140, the XZ driver 140 includes a Z-axis frame 148 connected to a second ball joint 142 coupled to a proximal end of the rotational axis 122, and an X-axis frame 154 that accommodates the Z-axis frame 148.

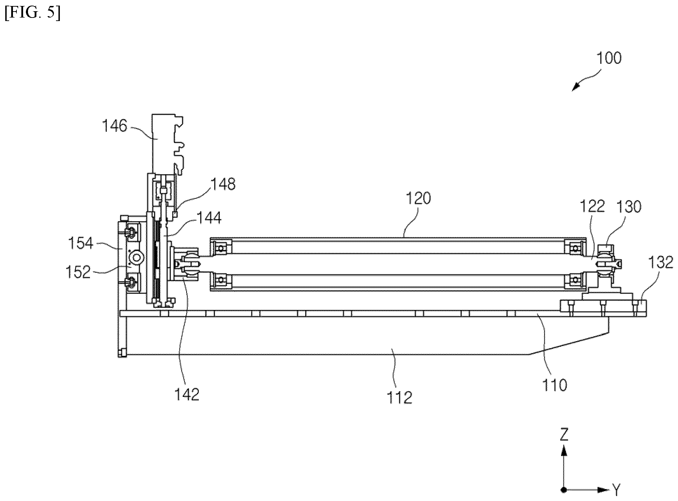

Here, the proximal end of the rotational axis 122 of the roller 120 is also provided with a second ball joint 142, which corresponds to the distal end of the rotational axis 122 being fixed to the first ball joint 130, and the cross-sectional view of FIG. 5 illustrates the fixing structure for the rotational axis 122 of the roller 120.

When the proximal end of the rotational axis 122 is moved in the two-dimensional plane by the XZ driver 140 and the distal end of the rotational axis 122 is pivoted accordingly, the angle formed by the distal end of the rotational axis 122 with respect to the XZ plane changes, and to accommodate this, both ends of the rotational axis 122 are supported by the first and second ball joints 142, respectively. Thus, the proximal end of the rotational axis 122 is supported by the second ball joint 142 to be pivotable in any direction.

In addition, as the proximal end of the rotational axis 122 is moved in the two-dimensional plane by the XZ driver 140, the distance of the distal end of the rotational axis 122 to the XZ plane (the distance between a point and a plane) changes, and to accommodate this, the distal end of the rotational axis 122 must be movable. To accomplish this, the first ball joint 130 is supported to be able to move forward and backward on a Y-axis rail 132 mounted to the base 110.

As a result, the XZ driver 140 causes the second ball joint and the Z-axis frame 148 to move linearly in a two-dimensional plane, and correspondingly, the first ball joint 130 passively moves forward and backward on the Y-axis rail 132.
Returning again to FIGS. 1 through 4, the specific configuration of the XZ driver 140 will be described. The XZ driver 140, when viewed as a whole, comprises a structure in which the Z-axis frame 148 is constrained to move linearly in only one direction, that is, the X-axis direction, with respect to the X-axis frame 154.

A second ball joint 142, coupled to a proximal end of the rotational axis 122, is coupled about a Z-axis rail 144 to allow linear movement. The Z-axis rail 144 extending along the Z-axis direction is installed on the Z-axis frame 148, and a Z-axis driver 146 fixed on the Z-axis frame 148 provides power for the second ball joint 142 to move linearly along the Z-axis rail 144. For example, the Z-axis driver 146 may linearly move the second ball joint 142 in a ball screw method.

Depending on the embodiment, a linear driver using another method besides a ball screw method may be applied, and the second ball joint 142 may be provided with a plate coupled to the Z-axis rail 144.

In addition, the entirety of the Z-axis frame 148, including the Z-axis driver 146, is coupled for linear movement relative to the X-axis rail 150 provided in the X-axis frame 154. Coupled to the X-axis rail 150 extending along the X-axis direction, the Z-axis frame 148 can only move in one direction of the X-axis, and power provided by the X-axis driver 152 mounted on the X-axis frame 154 causes the Z-axis frame 148 to move linearly along the X-axis rail 150.

Eventually, the second ball joint 142, which couples to the proximal end of the rotational axis 122, is freely movable in the XZ plane by the XZ driver 140, thereby allowing the roller 120 to freely implement a steering movement in the X plane and/or a tilting movement in the Z plane about which the distal end of the rotational axis 122 is a pivot point.

### [Second embodiment]

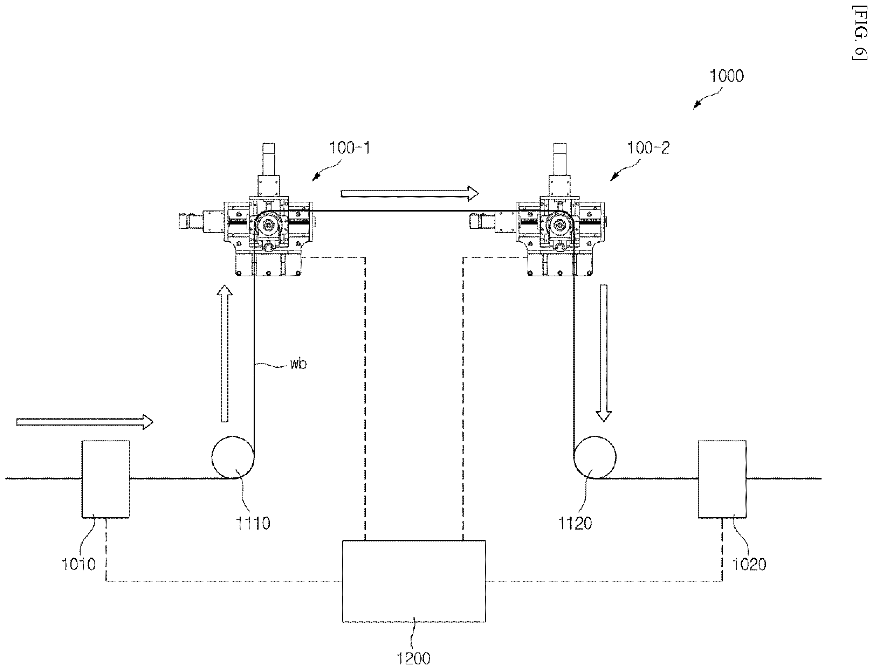

The meander control device 1000 can be configured by pairing the position rollers for meander control 100 described in detail in the first embodiment. FIG. 6 is a diagram illustrating an exemplary embodiment of a meander control device 1000 having the position roller for meander control 100 described above.

Referring to FIG. 6, the meander control device 1000 of the present invention includes first and second position rollers for meander control 100-1, 100-2, first and second EPSs 1010, 1020, first and second idle rollers 1110, 1120, and a control part 1200.

The first and second position rollers for meander control 100-1, 100-2 are the position rollers for meander control 100 described with reference to FIGS. 1 to 5, and the meander control device 1000 is provided with a pair of position rollers for meander control 100. In each roller 120 of the first and second position rollers for meander control 100-1, 100-2, the distal end and the proximal end of the rotational axis 122 are disposed in the same direction.

In addition, the meander control device 1000 includes a first EPS 1010 disposed on the upstream side of the first position roller for meander control 100-1, and a second EPS 1020 disposed on the downstream side of the second position roller for meander control 100-2. The edge position sensor (EPS) is a sensor that measures the position of an edge of a traveling web Wb, and the edge information of the web Wb measured by the EPS is used as data to determine the meander direction and angle of the web Wb by comparing it to a reference position.

A first idle roller 1110 is disposed between the first EPS 1010 and the first position roller for meander control 100-1, and a second idle roller 1120 is disposed between the second position roller for meander control 100-2 and the second EPS 1020. In other words, the first and second idle rollers 1110, 1120 are idle rollers disposed at the inlet and outlet of the paired position rollers for meander control 100-1, 100-2, respectively, and the traveling direction of the web Wb is switched by the first and second idle rollers 1110, 1120. By the first and second idle rollers 1110, 1120 switching to the Z-axis direction, a tension is applied to the web Wb, and the tension applied to the web Wb generates sufficient friction force between the web Wb and each roller 120 of the first and second position rollers for meander control 100-1, 100-2.

The meander traveling of the web Wb is achieved by adjusting the traveling direction of the web Wb by changing the angle of the roller 120 to cause a change in the direction of the moment of the center of the web Wb, and the effect of changing the direction of the moment of the center of the web Wb is greatest when there is no slip between the roller 120 and the web Wb. In this respect, first and second idle rollers 1110, 1120 are necessary.

The control part 1200 controls each XZ driver 140 of the first and second position rollers for meander control 100-1, 100-2 based on the meander traveling information detected by the first EPS 1010, i.e., the meander direction and angle of the web Wb. Basically, the angle of the roller 120 is adjusted to act as a momentator in the opposite direction to the meander direction of the web Wb.

And, if the first EPS 1010 is a sensor to check whether the web Wb is meandering, the second EPS 1020 corresponds to a sensor to check whether the meander of the web Wb is corrected by the first and second position rollers for meander control 100-1, 100-2. The control part 1200 can perform feedback control using the meander traveling information detected by the second EPS 1020 as the feedback value. That is, the result of the meander correction to the target value of correcting the meander of the web Wb to be zero is used as the feedback value, so that the meander can be controlled more quickly and effectively.

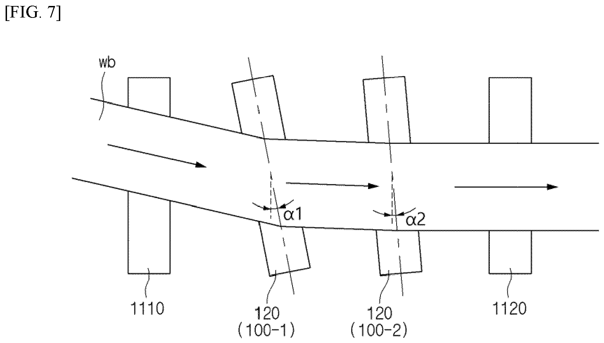

And, the control part 1200 can independently control each XZ driver 140 of the first and second position rollers for meander control 100-1, 100-2. FIG. 7 is a diagram illustrating an example of controlling an angle of incidence α1 and an angle of exit α2 of the web Wb by the meander control device 1000, wherein the first and second position rollers for meander control 100-1, 100-2 form different angles.

Meanwhile, it has been described above that in the first and second position rollers for meander control 100-1, 100-2, each roller 120 can freely implement a steering movement in the X plane and a tilting movement in the Z plane where a distal end of the rotational axis 122 is a pivot point.

The steering movement has a great ability to control web meander, but it has a disadvantage that the angle of incidence α1 and angle of exit α2 are limited by the elongation percentage of the material, i.e., the range of meander control is narrow, and it is difficult to respond when the web Wb is lifted in the height direction. In contrast, the tilting movement has less meander control ability than the steering movement, but it has the advantage of minimizing the slip phenomenon that occurs when the web Wb lifts, stretches, and slides.

The meander control device 1000 of the present invention is provided with first and second position rollers for meander control 100-1, 100-2 capable of implementing both a steering movement in the X plane and a tilting movement in the Z plane, so that the control part 1200 controls each X-axis driver 152 of the first and second position rollers for meander control 100-1, 100-2 to control the angle of incidence α1 and angle of exit α2 of the traveling web Wb, while controlling (tilting control) the slip of the traveling web Wb by controlling each Z-axis driver 146 of the first and second position rollers for meander control 100-1, 100-2.

Therefore, the meander control device 1000 of the present invention has excellent meander control ability by minimizing slip by maximizing the friction force between the web Wb and the roller 120, and is easy to install even in a narrow space because the first and second position rollers for meander control 100-1, 100-2 are structurally independent of each other.

For reference, the steering value and tilting value for the first and second position rollers for meander control 100-1, 100-2 are experimental values, and optimal adjustment values are selected according to the elastic modulus and surface friction coefficient of the web Wb, so there is a limit to expressing them in specific figures, and different measures are established for different materials of the web Wb to perform the meander control of the web Wb.

The present invention has been described in more detail above with reference to the drawings and embodiments. However, it is to be understood that the configurations shown in the drawings or embodiments described herein are only one embodiment of the present invention and do not represent all of the technical ideas of the present invention, and that there may be various equivalents and modifications that may replace them at the time of filing the present disclosure.

### [Reference numerals]

100: POSITION ROLLER FOR MEANDER CONTROL
110: BASE
112: VERTICAL RIB
120: ROLLER
122: ROTATIONAL AXIS
130: FIRST BALL JOINT
132: Y-AXIS RAIL
140: XZ DRIVER
142: SECOND BALL JOINT
144: Z-AXIS RAIL
146: Z-AXIS DRIVER
148: Z-AXIS FRAME
150: X-AXIS RAIL
152: X-AXIS DRIVER
154: X-AXIS FRAME
1000: MEANDER CONTROL DEVICE
100-1: FIRST POSITION ROLLER FOR MEANDER CONTROL
100-2: SECOND POSITION ROLLER FOR MEANDER CONTROL
1010: FIRST EPS
1020: SECOND EPS
1110: FIRST IDLE ROLLER
1120: SECOND IDLE ROLLER
1200: CONTROL PART
wb: WEB
α1: ANGLE OF INCIDENCE
α2: ANGLE OF EXIT

## Claims

1. A position roller for meander control comprising:
a roller having a rotational axis;
a first ball joint supporting a distal end of the roller along the rotational axis, the first ball joint configured to permit pivotal movement of the roller;
an XZ driver configured to drive two-dimensional motion of a proximal end of the roller, the two-dimensional motion being in a plane transverse to the rotational axis of the roller; and
a base supporting the first ball joint and the XZ driver.

2. The position roller of claim 1, wherein the first ball joint supports the distal end of the roller so that the distal end of the roller can pivot in any direction relative to the base.

3. The position roller of claim 2, wherein the first ball joint is slidably coupled to a Y-axis rail mounted on the base.

4. The position roller of claim 3, wherein the XZ driver comprises:
a second ball joint coupled to the proximal end of the roller along the rotational axis;
a Z-axis frame having a Z-axis rail to which the second ball joint is slidably coupled for linear movement;
a Z-axis driver to provide power for linear movement of the second ball joint along the Z-axis rail;
an X-axis frame having an X-axis rail to which the Z-axis frame is slidably coupled for linear movement; and
an X-axis driver to provide power for linear movement of the Z-axis frame along the X-axis rail.

5. The position roller of claim 4, wherein the second ball joint supports the proximal end of the roller for pivoting of the proximal end of the roller in any direction relative to the base.

6. The position roller of claim 5, wherein the first ball joint is configured to passively move forward and backward along the Y-axis rail in response to linear movement of the second ball joint and Z-axis frame driven by the XZ driver.

7. A meander control device comprising:
first and second position rollers each being the position roller according to claim 1;
a first edge position sensor (EPS) disposed upstream of the first position roller and configured to provide meander control of the first position roller;
a second EPS disposed downstream of the second position roller and configured to provide meander control of the second position roller;
a first idle roller disposed between the first EPS and the first position roller;
a second idle roller disposed between the second position roller and the second EPS; and
a control part that is configured to control the XZ driver of each of the first and second position rollers to provide meander control based on meander traveling information detected by the first EPS.

8. The meander control device of claim 7, wherein the control part is configured to perform feedback control using meander traveling information detected by the second EPS as a feedback value.

9. The meander control device of claim 8, wherein the control part is configured to independently control the XZ driver of each of the first and second position rollers.

10. The meander control device of claim 9, wherein the control part is configured to control the XZ driver of the first position roller to control an angle of incidence of the traveling web, and the control part is configured to control the XZ driver of the second position roller to control an angle of exit of the traveling web.

11. The meander control device of claim 10, wherein the control part is configured to control the X-axis driver of each of the first and second position rollers to control the angle of incidence and the angle of exit of the traveling web, while controlling the Z-axis driver of each of the first and second position rollers to control slip of the traveling web.
